Europäisches Patentamt

European Patent Office

Office européen des brevets

(19)

(11) Numéro de publication: **0 015 791**
**B1**

(12) # FASCICULE DE BREVET EUROPEEN

(45) Date de publication du fascicule du brevet:
25.01.84

(51) Int. Cl.³: **F 01 L 1/08, F 02 B 29/08**

(21) Numéro de dépôt: 80400179.0

(22) Date de dépôt: 05.02.80

(54) Procédé et dispositif pour améliorer le rendement d'un moteur à combustion interne, notamment suralimenté.

(30) Priorité: 05.02.79 FR 7902877

(43) Date de publication de la demande:
17.09.80 Bulletin 80/19

(45) Mention de la délivrance du brevet:
25.01.84 Bulletin 84/4

(84) Etats contractants désignés:
BE CH DE GB IT NL

(56) Documents cités:
DE - A - 2 638 651
DE - A - 2 710 189
DE - C - 566 592
FR - A - 2 010 506
FR - A - 2 091 797
FR - A - 2 271 393
FR - A - 2 418 332

MTZ; 31 Jahrgang; Nr. 1, Januar 1970 Stuttgart H.
Reulein "Einfluss der Turbokühlung und des
Miller-Verfahrens auf die Leistung von aufgeladenen
Gasmotoren", page 1 à 10
CIMAC - 13è Congrès international des machines à
combustion - Wien 1979 - Session B3 - Papier D19 G.
Zappa et T. Franca "A4 - stroke high speed diesel engine
with two-stage of supercharging and variable
compression ratio", page D19 - 5 à 7

(73) Titulaire: SOCIETE D'ETUDES DE MACHINES
THERMIQUES S.E.M.T., 2, Quai de Seine,
F-93202 Saint-Denis (FR)

(72) Inventeur: Curtil, Rémi, 1, Allée Auguste Renoir,
F-95560 Montsoult (FR)

(74) Mandataire: Weinstein, Zinovi et al, Cabinet Z.
WEINSTEIN 20, Avenue de Friedland, F-75008 Paris (FR)

## Procédé et dispositif pour améliorer le rendement d'un moteur à combustion interne, notamment suralimenté

L'invention concerne généralement et a essentiellement pour objet un procédé et un dispositif pour améliorer le rendement d'un moteur à combustion interne à quatre temps tel qu'un moteur Diesel, notamment suralimenté par exemple à pression constante.

Les conditions optimales de fonctionnement d'un moteur qui sont calculées pour des charges nominales, sont altérées notamment au démarrage, aux charges partielles et aux charges élevées.

Pour un moteur Diesel, on limite généralement le taux de compression aux charges élevées afin de réduire les pressions en fin de compression. Selon le procédé connu sous le nom de cycle de Miller développé pour le moteur à gaz, et par exemple décrit dans l'article «Einfluss der Turbokühlung und des Miller-Verfahrens auf die Leistung von aufgeladenen Gasmotoren» paru dans la revue MTZ «Motortechnische Zeitschrift» de janvier 1970 et dans l'article «Stroke high speed Diesel engine with two-stage of supercharging and variable compression ratio» paru dans CIMAC de Vienne (1979), la limitation des pressions en fin de compression est obtenue en ayant un taux de compression effectif variable qui soit maximum au démarrage et minimum à forte charge. Pour cela, on avance la fermeture de la soupape d'admission par rapport au point mort bas, l'instant de fermeture étant asservi à la valeur de la charge. Cette avance à la fermeture (maximum à forte charge) permet de réaliser une détente de la charge d'air contenue dans le cylindre et de diminuer ainsi la course effective du piston pendant la phase de compression.

L'allumage du combustible étant obtenu dans le cas d'un moteur Diesel par élévation de la température de la charge d'air dans le cylindre au cours de la phase de compression, le taux de compression doit avoir une certaine valeur pour assurer l'allumage du combustible dans tous les cas de fonctionnement du moteur. Or, aux charges partielles et au démarrage notamment, cette température en fin de compression peut s'avérer insuffisante. Plusieurs procédés connus permettent de pallier cette insuffisance par réchauffement de la charge d'air présente dans le cylindre avant la phase de compression. Parmi ces procédés connus, on peut citer ceux qui consistent à:

— faire un appoint par une source de chaleur externe,
— modifier les phases de distribution du cycle du moteur afin de recycler les gaz présents dans le conduit du collecteur.

La seconde solution entre dans le cadre de l'invention et est notamment décrite dans le Fr-A-2 271 393 où il est prévu de recycler les gaz d'échappement présents dans le conduit du collecteur d'échappement en les réintroduisant partiellement dans le cylindre pour réchauffer la charge d'air d'admission. Ce recylage est obtenu en maintenant la soupape d'échappement en partie ouverte pendant la phase d'admission.

Il est important de noter que dans ce Fr-A-2 271 393, il est prévu de maintenir au démarrage, comme dans toutes les conditions de fonctionnement du moteur, les soupapes d'échappement ouvertes en fin de course de refoulement et pendant la majeure partie de la course d'aspiration. En outre, il est précisé qu'au démarrage il est préférable d'augmenter artificiellement la contre-pression à l'échappement par des dispositifs appropriés tels que des volets.

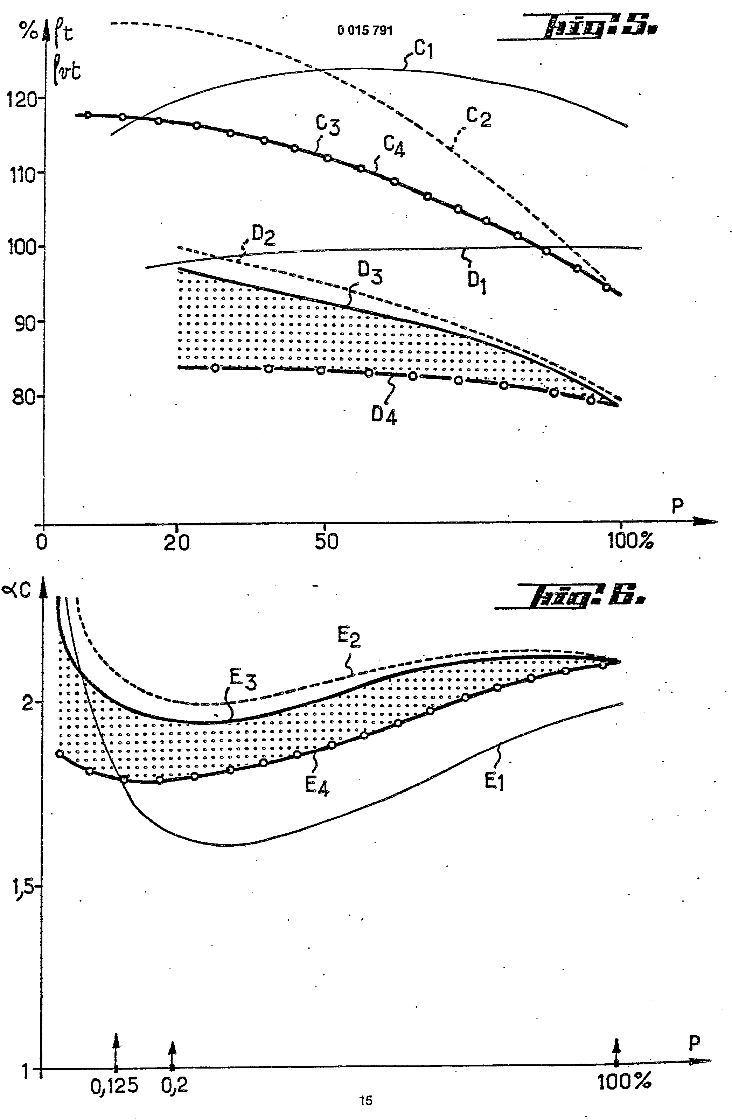

Par ailleurs, la demande de brevet français n° 2 010 506 décrit également un procédé de réintroduction des gaz d'échappement dans le cylindre, ce recyclage étant obtenu en réouvrant la soupape d'échappement vers la fin de la phase d'admission. Dans ce document, la fermeture de la soupape d'admission est classique, et correspond au cas illustré par les courbes $C_1$, $D_1$, $E_1$ des figs 5 et 6. En conséquence, il ne répond pas au cycle de Miller pour les fortes charges du moteur. Il n'est donc pas possible d'aspirer une quantité dosée de gaz d'échappement sans utiliser des volets à l'échappement. L'emploi de ces volets présente des inconvénients d'ordre mécanique et de commande et également dans l'imprécision du dosage de la quantité de gaz résiduels aspirée dans le cylindre de cycle à cycle ou de cylindre à cylindre. Enfin, dans ce document, le dosage du gaz réaspiré est basé sur les différences de pressions régnant respectivement dans le cylindre et le collecteur d'échappement.

Le but principal de l'invention est d'obtenir un taux de compression effectif qui puisse varier automatiquement sans introduire d'éléments supplémentaires quelle que soit la charge, en jouant uniquement sur les diagrammes de distribution du cycle du moteur pour résoudre efficacement les problèmes posé aux fortes charges, ainsi que notamment aux faibles charges sur les lois d'hélice et au démarrage. En effet, il ne faut pas oublier que d'une façon générale la réalisation d'un couple moteur égal à celui que l'on rencontre aux vitesses réduites sur une loi d'hélice et a fortiori pour des couples supérieurs, est rendue de plus en plus difficile avec l'augmentation des pressions moyennes effectives nominales (supérieures à 20–25 bar) pour les moteurs à quatre temps suralimentés par turbocompresseur.

L'invention a donc pour objet un procédé pour améliorer le rendement d'un moteur Diesel à quatre temps, suralimenté par exemple, à pression constante dont le diagramme le distribution comprend une phase de recouvrement entre les levées d'au moins une soupape d'échappement et d'au moins une soupape d'admission, et consistant à fermer la soupape d'admission d'une manière avancée selon le cycle de Miller pour moduler automatiquement le taux de remplissage des cylindres du moteur, caractérisé en ce qu'il consiste à fermer la soupape d'échappement au-delà de l'instant de fermeture fixe de la soupape d'admission afin, lors de l'augmentation progressive de la charge du moteur, d'abaisser automatiquement et graduellement, depuis le démarrage jusqu'à la puissance nominale, le taux de compression effectif et les températures de fin de compression, par diminution concomitante de la quantité de fluide gazeux présent dans le conduit d'échappement et constituée de gaz brûlés ou d'air frais, réaspirée par le cylindre au voisinage du point mort bas, compte tenu de l'évolution naturelle de la relation entre la pression d'air de suralimentation et la contre-pression à l'échappement du cylindre.

Selon une autre caractéristique de l'invention, le procédé consiste à fermer la soupape d'échappement pendant la majeure partie de la phase d'admission, à réouvrir partiellement la soupape d'échappement avant la fermeture de la soupape d'admission et à la refermer après la fermeture de la soupape d'admission.

Selon une autre caractéristique de l'invention, le procédé consiste à maintenir une levée partielle de la soupape d'échappement pendant la majeure partie de la phase d'admission et à maintenir cette levée partielle au-delà de l'instant de fermeture de la soupape d'admission.

L'invention a également pour objet un dispositif pour la mise en œuvre du procédé tel que précédemment défini, comportant une came de commande de levée de la soupape d'admission et une came de commande de levée de la soupape d'échappement possédant un bossage principal et un bossage supplémentaire; la came de commande de levée de la soupape d'admission et le bossage principal de la came de commande de levée de la soupape d'échappement permettant une levée des soupapes d'admission et d'échappement d'une façon telle que le diagramme de distribution comprend une phase de recouvrement entre les levées de ces soupapes, avec une fermeture avancée, en un point fixe, de la soupape d'admission conformément au cycle de Miller, caractérisé en ce que le bossage supplémentaire de la came de commande de levée de la soupape d'échappement ferme la soupape d'échappement au-delà de l'instant de fermeture fixe de la soupape d'admission.

Selon un autre avantage important de l'invention, la réaspiration d'air ou de gaz de l'échappement par le cylindre est contrôlée automatiquement par l'évolution naturelle de la contre-pression présente dans le collecteur d'échappement par rapport à la pression d'air d'admission en fonction de la charge et de la vitesse.

Selon un autre avantage important de l'invention, on garde les avantages du système Miller aux fortes charges ainsi que pour des conditions de fonctionnement aux très faibles charges et au démarrage sans faire appel à des dispositifs et à leur asservissement pour faire varier le calage des organes de distribution contrôlant l'admission d'air du moteur en fonction de la charge.

D'autres avantages, caractéristiques et détails apparaîtront plus clairement à l'aide de la description explicative qui va suivre faite en référence aux dessins annexés donnés uniquement à titre d'exemple et dans lesquels:

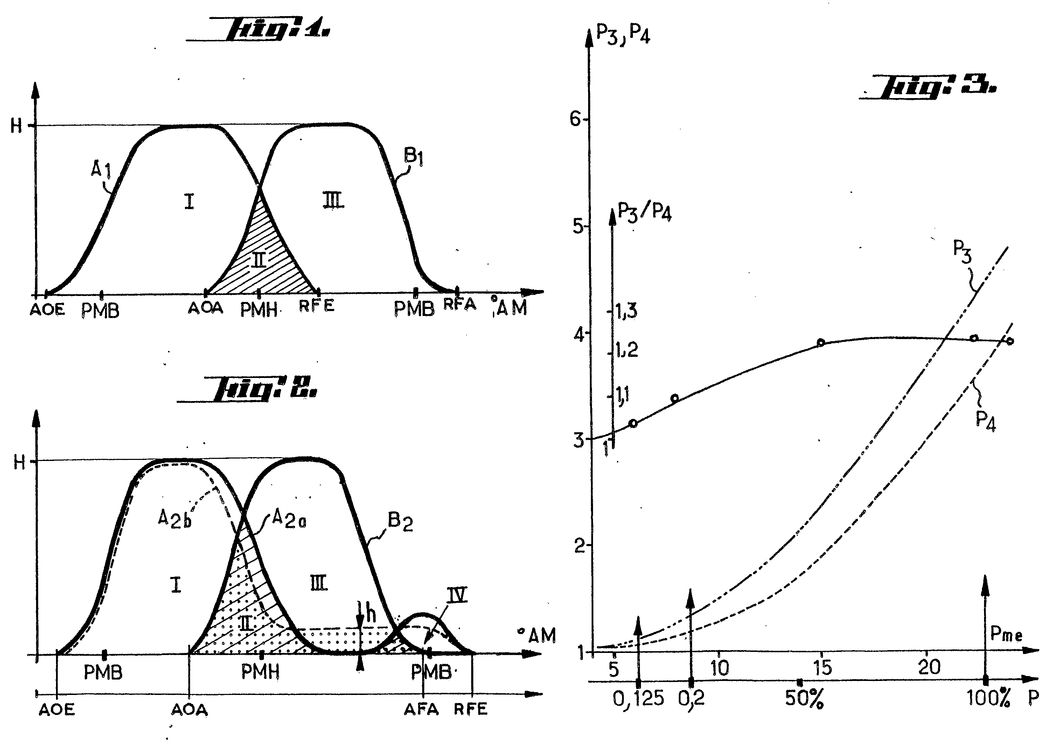

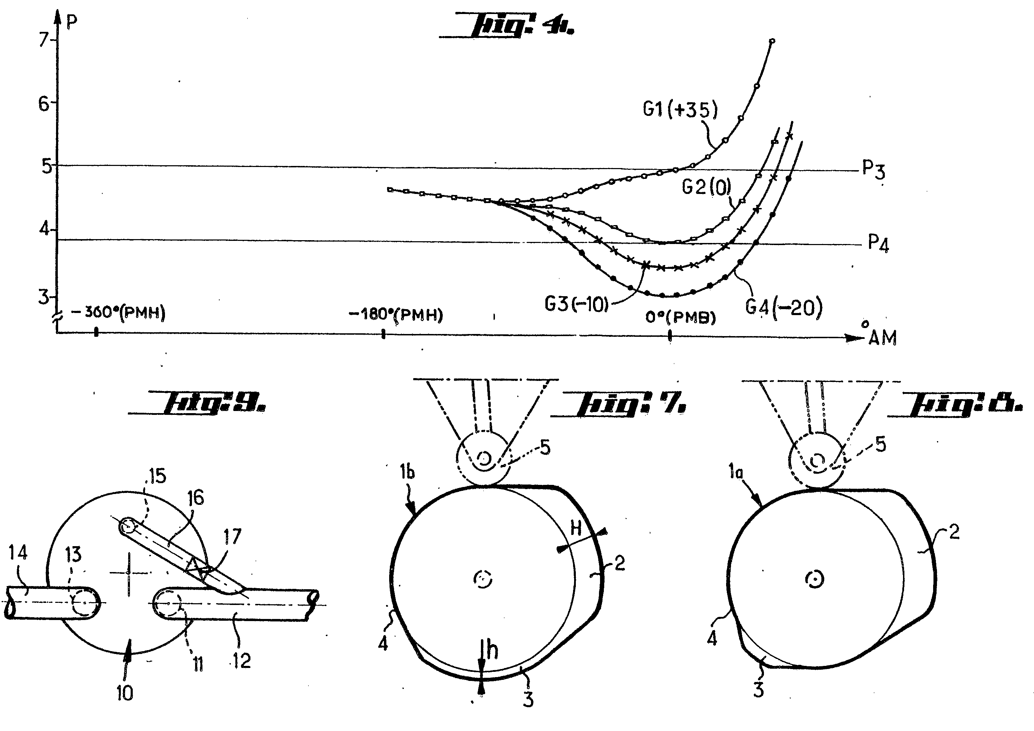

La fig. 1 représente graphiquement les courbes de levée de came respectives de la soupape d'échappement (courbe A1) et de la soupape d'admission (courbe B1) en fonction de l'angle de rotation de l'arbre-manivelle (°AM) pour un moteur ayant un diagramme de distribution classique; la fig. 2 représente les courbes de levée de came de la soupape d'échappement pour deux modes de réalisation de l'invention respectivement illustrés par les courbes (A2a) et (A2b) en fonction de l'angle de rotation de l'arbre-manivelle, et la courbe de levée de came de la soupape d'admission (courbe B2); la fig. 3 représente graphiquement les pressions respectivement du collecteur d'admission (courbe P3) et du collecteur d'échappement (courbe P4) selon la loi d'hélice, ainsi que le rapport P3/P4 également selon la loi d'hélice en fonction de la pression moyenne effective et de la puissance (seule la pression moyenne effective Pme variant linéairement); la fig. 4 représente graphiquement la pression régnant dans le cylindre pour différents instants de fermeture de la soupape d'admission dans le cas de l'invention, et pour un moteur à diagramme de distribution classique avec fermeture de la soupape d'admission par exemple à 35° après le point mort bas du piston; la fig. 5 représente graphiquement sur un même diagramme deux séries de courbes correspondant respectivement aux différents rendements volumétriques et taux de remplissage en fonction de la puissance (selon la loi d'hélice), obtenus pour différents diagrammes de distribution dont celui conforme à l'invention; la fig. 6 représente graphiquement l'excès d'air de combustion ($\alpha$ c) dans le cylindre en fonction de la puissance (selon la loi d'hélice) pour différents diagrammes de distribution dont celui conforme à l'invention; la fig. 7 représente schématiquement la came de commande de la soupape d'échappement afin d'obtenir la courbe développée (A2B) représentée sur la fig. 2; la fig. 8 représente schématiquement la came de commande de la soupape d'échappement pour obtenir la courbe (A2a) représentée sur la fig. 2; et la fig. 9 représente schématiquement un dispositif complémentaire associé au procédé conforme à l'invention.

Le diagramme de distribution classique représenté sur la fig. 1 peut être divisé en trois zones:
- zone I: phase d'échappement classique avec avance à l'ouverture échappement (AOE) par rapport au point mort bas du piston (PMB) et retard à la fermeture échappement (RFE) par rapport au point mort haut du piston (PMH),
- zone II: phase de balayage avec recouvrement des soupapes d'admission et d'échappement (zone hachurée),
- zone III: phase classique d'admission avec avance à l'ouverture admission (AOA) par rapport au point mort haut du piston (PMH) et retard à la fermeture admission (RFA) après le point mort bas du piston.

Le diagramme de distribution conforme à l'invention représenté sur la fig. 2 se décompose en quatre phases:
- phase I: identique à la phase I précédente,
- phase II: pour la courbe A2a la phase de balayage est sensiblement identique à la phase II précédente et pour la courbe A2b avec levée résiduelle de la soupape d'échappement, la section de recouvrement conduit sensiblement au même taux de balayage que pour la courbe A2a (zones hachurées),
- phase III: identique à la phase III précédente mais avec avance de la fermeture de la soupape d'admission (AFA) par rapport au point mort bas du piston (PMB),
- phase IV: cette phase est nouvelle et correspond à une phase de remplissage complémentaire contrôlant automatiquement la communication collecteur d'échappement-cylindre à l'aide de la soupape d'échappement. Pour la courbe A2a, la soupape d'échappement est fermée, puis réouverte au voisinage de l'instant de fermeture de la soupape d'admission avant d'être refermée légèrement après le point mort bas du piston. Pour la courbe A2b, la soupape d'échappement est maintenue partiellement ouverte pendant la majeure partie de la phase d'admission et maintenue dans cette position au-delà de l'instant de fermeture de la soupape d'admission pour être refermée légèrement au-delà du point mort bas du piston.

Supposons un moteur à combustion interne à quatre temps de type Diesel suralimenté et considérons son fonctionnement dans différentes conditions depuis les charges les plus élevées jusqu'au démarrage.

Aux fortes charges (de 50 à 100% de puissance et surcharge: fig. 3)

Pendant la période de recouvrement des soupapes d'échappement et d'admission (phase II sur la fig. 2), le balayage du cylindre s'effectue normalement car aux fortes charges la pression à l'admission est notablement supérieure à la contre-pression régnant dans le conduit du collecteur d'échappement (P3 > P4: fig. 3).

Comme illustré par la fig. 4, la fermeture de la soupape d'admission qui est avancée par rapport à la fermeture conventionnelle de cette soupape (courbe G₁) correspondant au taux de remplissage maximum réalisable (fig. 5, courbe D₁), permet de diminuer relativement le taux de remplissage ($l_t$) vis-à-vis du taux de remplissage maximum obtenu dans les moteurs conventionnels illustrés par les courbes G₁ (fig. 4) et D₁ (fig. 5). De cette façon on réduit la course effective de compression du piston afin de limiter la pression en fin de compression. On peut par exemple choisir le point de fermeture de la soupape d'admission de façon à ce que, au cours de la détente précitée, la pression dans le cylindre chute jusqu'à une valeur voisine ou même légèrement inférieure à la valeur de la contre-pression (P4) régnant dans le conduit du collecteur d'échappement (fig. 4).

Sur cette fig. 4 sont représentées quatre courbes G₁, G₂, G₃, G₄ relatives à la pression dans le cylindre aux charges élevées. Ces quatre courbes correspondent respectivement au cas d'un moteur ayant un diagramme de distribution classique (fermeture admission RFA à environ 35° AM après le point mort bas) et d'un moteur ayant un diagramme de distribution conforme à l'invention pour une fermeture admission sensiblement au point mort bas (AFA = 0), à 10° AM (AFA = − 10°) et à 20° AM (AFA = − 20°) avant le point mort bas.

De ce fait, il ne se produit aucun échange de gaz réellement significatif entre le collecteur d'échappement et le cylindre au cours de la phase IV (fig. 2) étant donné la relation existant entre la pression régnant dans le cylindre et la pression moyenne régnant dans l'échappement pendant cette phase IV d'ouverture de la soupape d'échappement. En conséquence la pression de fin de compression et la pression maximale de combustion sont dans ce cas essentiellement contrôlées par le choix de l'angle fixe de fermeture de la soupape d'admission, comme cela est le cas pour le système Miller avec une avance de la fermeture admission variable et maximale à pleine charge. Il convient également de remarquer qu'une réaspiration de l'air de balayage présent à l'entrée du conduit d'échappement pendant la phase IV (fig. 2) est d'autant plus limitée ou totalement inexistante lorsque le niveau de la charge augmente, et ce, quelle que soit la vitesse moteur, augmentation de charge matérialisée par l'augmentation du rapport P3/P4 illustré sur la fig. 3. En d'autres termes, la limitation de la pression maximale de combustion intervient donc au moment où cela est le plus nécessaire.

Aux charges moyennes (sensiblement de 10% à 50% de puissance: fig. 3)

Dans ce cas le taux de balayage est d'autant plus réduit que la charge est plus faible car le rapport P3/P4 diminue progressivement (fig. 3), mais ce rapport est suffisant (pour les deux variantes a et b de l'invention représentées sur la fig. 2) pour assurer la présence d'une certaine quantité d'air en amont du conduit du collecteur d'échappement.

Comme cela est représenté sur la fig. 3 pour une loi d'hélice (donnée uniquement à titre d'exemple), la diminution progressive du rapport P3/P4 (simultanément avec la charge) conduit à une pression d'échappement moyenne supérieure à la pression dans le cylindre qui régnerait dans ce dernier s'il n'y avait pas ouverture de la soupape d'échappement dans la phase IV (fig. 2). En d'autres termes, la réaspiration au cours de la phase IV de l'air frais de balayage, stocké en amont du collecteur d'échappement pendant la phase de balayage précédente, permet d'obtenir un taux de remplissage supérieur à ce qu'il serait sans la présence de la phase IV mais avec un point de fermeture de la soupape d'admission au voisinage ou légèrement avant le point mort bas.

Le taux de remplissage est dicté cette fois non pas par la fermeture de la soupape d'admission mais par la fermeture de la soupape d'échappement.

Dans ce domaine de charges où il n'existe pas de limitation pour la pression maximale de combustion, il est ainsi possible d'augmenter le taux de compression effectif, le taux de remplissage et l'excès d'air de combustion. Ainsi, on minimise aux charges partielles les problèmes des moteurs fortement suralimentés.

Démarrage et très faibles charges (0 à 10% de puissance: fig. 3)

En dessous de 10% de puissance, la fig. 2 montre que le taux de balayage s'annule rapidement puisque la contre-pression à l'échappement (P4) devient égale et même supérieure à la pression d'admission (P3).

D'une façon analogue à ce qui se passe aux charges partielles (cas évoqué précédemment), la combinaison d'une fermeture de la soupape d'admission anticipée par rapport au point mort bas du piston qui permet une détente d'air dans le cylindre, et de la présence de la phase IV (fig. 2) permet non seulement d'obtenir le taux de compression effectif maximal du moteur, mais aussi de pouvoir réaspirer automatiquement une partie des gaz de combustion du cycle d'échappement précédent après la première explosion sans être conduit à augmenter artificiellement la contre-pression à l'échappement à l'aide de dispositifs connus en soi tels que des volets.

Le taux de compression effectif est une fois encore déterminé par l'instant de fermeture échappement et non par la fermeture de la soupape d'admission. Cette réaspiration de gaz brûlés et le maintien du taux de compression effectif élevés contribuent efficacement à résoudre les problèmes de démarrage et de fonctionnement aux très faibles charges.

En se reportant à la fig. 5, il a été représenté sur le même graphique deux séries de courbes qui correspondent respectivement pour les courbes $C_1$–$C_4$ au rendement volumétrique total $(\rho_{vt})$ et pour les courbes D1–D4 au taux de remplissage du cylindre $(\rho_t)$ en fonction de la puissance (selon la loi d'hélice).

Ces courbes on été représentées pour les cas suivants:

– courbes C1–D1: moteur à diagramme de distribution classique avec fermeture de la soupape d'admission à environ 35° d'arbre-manivelle après le point mort bas,

– courbes C2–D2: moteur auquel on applique le système Miller avec l'instant de fermeture de la soupape d'admission variable selon la charge (entre 10° d'arbre-manivelle avant le point bas et 30° d'arbre-manivelle après le point mort bas),

– courbes C3 – D3: moteur auquel on applique le procédé conforme à l'invention avec fermeture admission fixe au voisinage de 10° d'arbre-manivelle avant le point mort bas et fermeture échappement fixe au voisinage de 30° d'arbre-manivelle après le point mort bas,

– courbes C4–D4: moteur pour lequel la fermeture de la soupape d'admission est fixe et situé sensiblement au point mort bas, mais sans maintien de l'ouverture ou réouverture de la soupape d'échappement au voisinage du point mort bas (cycle actuellement connu sous le nom d'Atkinson,) l'instant de fermeture étant par exemple situé à 10° d'arbre-manivelle avant le point mort bas; il est à noter que la courbe C4 est pratiquement confondue avec la courbe C3 précédente.

En se reportant à la fig. 6, il a été illustré sur le même graphique différentes courbes E1–E4 qui représentent la variation de l'excès d'air de combustion dans le cylindre en fonction de la puissance (selon la loi d'hélice). Ces différentes courbes sont à associer respectivement aux quatre cas de fonctionnement qui ont été envisagés pour la fig. 5.

Avant de tirer des conclusions sur les courbes des figs 5 et 6, il est préférable de donner tout d'abord une définition exacte du taux de remplissage, du rendement volumétrique total, du taux de balayage et de l'excès d'air:

$$\text{Taux de remplissage} = \frac{\text{Masse d'air contenue dans le cylindre après la fermeture admission.}}{\text{Masse d'air contenue dans la cylindrée unitaire aux conditions de température et de pression à l'entrée du cylindre (c'est-à-dire à la densité de l'air à l'aspiration).}}$$

$$\text{Rendement volumérique total} = \frac{\text{Masse d'air traversant la soupape d'admission durant un cycle admission.}}{\text{Masse d'air contenue dans la cylindrée unitaire aux conditions de température et de pression à l'entrée du cylindre.}}$$

$$\text{Taux de balayage} = \rho_{vt} - \rho_t$$

$$\text{Excès d'air de combustion} = \frac{\text{Quantité d'air dans le cylindre}}{\text{Quantité d'air stœchiométriquement nécessaire pour brûler la quantité de combustible introduite dans le cylindre.}}$$

Les courbes des figs 5 et 6 ont été établies, pour les différents cas de fonctionnement envisagés, pour une même pression maximum de combustion ou une puissance nominale de 100%, ce qui implique que dans les cas de fonctionnement: moteur auquel on applique le système Miller, moteur auquel on applique le procédé conforme à l'invention et moteur avec fermeture admission fixe mais sans ouverture ou réouverture de la soupape d'échappement, la pression de suralimentation est plus élevée à la puissance nominale que dans le cas du moteur à diagramme de distribution classique.

Il est rappelé ici que les courbes C représentent la variation du rendement volumétrique total ($I_{vt}$) en fonction de la puissance (selon la loi d'hélice), les courbes D des variations du taux de remplissage du cylindre ($I_t$) également en fonction de la puissance (selon la loi d'hélice) et les courbes E la variation de l'excès d'air de combustion dans le cylindre toujours en fonction de la puissance (selon la loi d'hélice).

Pour le traçage des courbes représentées à la fig. 6, on a pris un excès d'air plus faible pour le moteur classique et on a effectué la compression à une même pression de fin de compression.

La comparaison des différentes courbes montre que le gain qu'apporte l'invention est très important par rapport à un moteur à diagramme de distribution classique, et non négligeable par rapport au moteur pour lequel la fermeture de la soupape d'admission est fixe et située avant le point mort bas (courbe D4), mais sans maintien de l'ouverture ou réouverture de la soupape d'échappement, la région hachurée illustrée à la fig. 6 montre le gain apporté par l'invention ($E_3$) par rapport au cycle d'Atkinson ($E_4$) en matière d'excès d'air de combustion, ce gain suit directement les variations respectives du taux de remplissage $I_t$ illustré par les courbes $D_3$–$D_4$ de la fig. 5.

Il est à remarquer également que les résultats offerts par l'invention sont proches de ceux donnés par un moteur auquel on applique le système Miller mais sans présenter la complexité d'un tel système au niveau d'une cinématique de distribution variable, asservie en fonction de la charge et/ou de la vitesse (respectivement les courbes $D_2$, $E_2$ pour le cycle de Miller).

En outre, le système Miller ne présente pas l'avantage de pouvoir réaspirer une quantité de gaz chauds aux très faibles charges.

En se référant aux figs 7 et 8, il va être décrit maintenant deux modes de réalisation qui permettent d'obtenir les levées de cames d'échappement conformes aux courbes A2b et A2a respectivement. Pour cela il suffit de modifier légèrement le profil de la came de commande de la soupape d'échappement.

La came de commande 1b représentée sur la fig. 7 possède un bossage principal classique 2 assurant la levée (H) de la soupape d'échappement et un bossage supplémentaire 3 de maintien d'une ouverture résiduelle (h) de la soupape d'échappement pendant la majeure partie de la phase d'admission et au-delà de celle-ci.

Etant donné qu'il n'y a pas de fermeture totale de la soupape d'échappement après la période de pleine ouverture de celle-ci, le bossage supplémentaire 3 se raccorde de façon sensiblement continue et progressive, par ses extrémités opposées, respectivement au bossage principal 2 et au profil circulaire de base 4 de la came 1b.

La came de commande 1a représentée sur la fig. 8 diffère de la came de commande 1b uniquement par le fait que le bossage supplémentaire 3 est séparé du bossage principal car il y a fermeture puis réouverture de la soupape d'échappement. Ce bossage supplémentaire 3 se raccorde donc, par ses deux extrémités, au profil circulaire de bas 4 de la came 1a.

Les cames 1a et 1b coopèrent par exemple avec un galet 5 qui suit le profil de ces cames afin d'assurer, par l'intermédiaire d'une culbuterie classique, les levées correspondantes de la soupape d'échappement.

Le procédé conforme à l'invention permet non seulement d'améliorer le fonctionnement du moteur aux charges partielles et au démarrage, mais peut être également utilisé en maintenant les conditions aux charges partielles inchangées afin d'augmenter la puissance nominale du moteur.

Ce procédé permet également d'envisager en particulier pour le mode de réalisation correspondant à la courbe A2b de la fig. 2, la suralimentation de petits moteurs Diesel en particulier à préchambre de compression et à taux de compression très élevés, moteurs qu'il était jusqu'alors difficile de suralimenter soit pour des raisons de pression maximale avec maintien du taux de compression, soit pour des raisons de démarrage lorsqu'on abaisse ce taux de compression.

L'invention peut s'appliquer également aux systèmes de suralimentation par impulsions ou pulse-converters dans certains cas particuliers où il existe entre les bouffées des différents cylindres successifs des écarts réguliers et favorables.

Il est à noter également que le mode de réalisation correspondant à la courbe A2a est particulièrement avantageux pour assurer un refroidissement de la soupape d'échappement, ce qui permet de faciliter le balayage notamment pour des moteurs à taux de compression très élevés ou pour des moteurs à préchambre.

Toujours dans l'esprit de l'invention, il est possible de prévoir la constitution de la réserve d'air frais en aval immédiat des soupapes d'échappement par l'intermédiaire d'un by-pass direct (sans passer par le cylindre) entre l'air de suralimentation avant moteur et le conduit d'échappement, en substitution de la phase II de la fig. 2.

Il est encore possible d'associer le fonctionnement de la phase IV de la fig. 2 non plus à la réserve d'air accumulée en aval immédiat des soupapes d'échappement, mais à une réserve d'air en liaison directe avec le collecteur d'air de suralimentation et dont l'ouverture au cours de la phase IV serait commandée par une soupape d'admission supplémentaire. La liaison entre le collecteur d'admission et cette soupape pouvant être interrompue en particulier aux charges élevées. Cette variante est illustrée schématiquement sur la fig. 9 où il est représenté un cylindre 10 avec au moins une soupape d'admission 11 associée au conduit 12 du collecteur d'admission et au moins une soupape d'échappement 13 associée au conduit 14 du collecteur d'échappement. Avantageusement, il est prévu une seconde soupape d'admission 15 associée à un conduit auxiliaire 16 relié au conduit 12 du collecteur admission. Un clapet 17 est monté par exemple dans ce conduit auxiliaire pour interrompre de façon sélective la liaison entre le collecteur admission et la soupape 15.

A titre d'exemple, il est important de noter que le retard à la fermeture échappement par rapport à la fermeture admission correspond à une rotation de l'arbre-manivelle et va jusqu'à 70° et même au-delà, avec une fermeture admission située entre 40° avant le point mort bas et 10° après le point mort bas. De préférence, le retard fermeture échappement correspond à une rotation de l'arbre-manivelle comprise entre 25 et 45° après la fermeture admission.

Bien entendu, l'invention n'est nullement limitée aux modes de réalisation qui n'ont été décrits et donnés qu'à titre d'exemple, et comprend tous les équivalents techniques et moyens décrits ainsi que leurs combinaisons si celles-ci sont réalisées et mises en œuvre dans le cadre des revendications qui suivent.

## Revendications

1. Procédé pour améliorer le rendement d'un moteur Diesel à quatre temps suralimenté par exemple à pression constante, dont le diagramme de distribution comprend une phase de recouvrement entre les levées d'au moins une soupape d'admission et d'au moins une soupape d'échappement, et consistant à fermer la soupape d'admission d'une manière avancée et en un point fixe, conformément au cycle de Miller pour automatiquement moduler le taux de remplissage des cylindres du moteur, caractérisé en ce qu'il consiste à fermer la soupape d'échappement au-delà de l'instant de fermeture fixe de la soupape d'admission afin, lors de l'augmentation progressive de la charge du moteur, d'abaisser automatiquement et graduellement, depuis le démarrage jusqu'à la puissance nominale, le taux de compression effectif et les températures de fin de compression, par diminution concomitante de la quantité de fluide gazeux présent dans le conduit d'échappement, et constitué de gaz brûlés ou d'air, réaspirée par le cylindre au voisinage du point mort bas, compte tenu de l'évolution naturelle de la relation entre la pression d'air de suralimentation de la contre-pression à l'échappement du cylindre.

2. Procédé selon la revendication 1, caractérisé en ce qu'il consiste à fermer la soupape d'échappement pendant la majeure partie de la phase d'admission, à réouvrir partiellement la soupape d'échappement avant la fermeture de la soupape d'admission et à la refermer après la fermeture de la soupape d'admission.

3. Procédé selon la revendication 1, caractérisé en ce qu'il consiste à maintenir une levée partielle de la soupape d'échappement pendant la majeure partie de la phase d'admission et à maintenir cette levée partielle au-delà de l'instant de fermeture de la soupape d'admission.

4. Procédé selon l'une des revendications précédentes, caractérisé en ce qu'il consiste à retarder la fermeture de la soupape d'échappement par rapport à la fermeture de la soupape d'admission d'une valeur correspondant à une rotation de l'arbre-manivelle allant jusqu'à 70° et même au-delà, et de préférence de 25 à 45° avec une fermeture de la soupape d'admission comprise entre environ 40° avant le point mort bas du piston et environ 10° après le point mort bas du piston, conformément au cycle de Miller.

5. Dispositif pour la mise en œuvre du procédé tel que défini dans l'une des revendications précédentes, comportant une came de commande de levées de la soupape d'admission et une came de commande de levée de la soupape d'échappement (1a, 1b) possédant un bossage principal (2) et un bossage supplémentaire (3), la came de commande de levée de la soupape d'admission et le bossage principal de la came de commande de levée de la soupape d'échappement permettant une levée des soupapes d'admission et d' échappement d'une façon telle que le diagramme de distribution comprend une phase de recouvrement entre les levées de ces soupapes, avec une fermeture avancée, en un point fixe, de la soupape d'admission conformément au cycle de Miller, caractérisé en ce que le bossage supplémentaire (3) de la came (1a, 1b) de commande de levée de la soupape d'échappement ferme la soupape d'échappement au-delà de l'instant de fermeture fixe de la soupape d'admission.

6. Dispositif selon la revendication 5, caractérisé en ce que le bossage supplémentaire (3) précité est distinct du bossage principal (2) précité pour que la came assure tout d'abord la fermeture de la soupape d'échappement puis sa réouverture avant la fermeture de la soupape d'admission et enfin sa fermeture après la fermeture de la soupape d'admission.

7. Dispositif selon la revendication 5, caractérisé en ce que le bossage supplémentaire (3) précité prolonge le bossage principal (2) précité pour maintenir une levée partielle de la soupape d'échappement pendant la majeure partie de la phase d'admission et au-delà de l'instant de fermeture de la soupape d'admission.

8. Dispositif selon l'une des revendications 5 à 7, caractérisé en ce qu'une réserve d'air frais est constituée en aval immédiat des soupapes d'échappement par l'intermédiaire d'un dispositif by-pass direct entre l'air de suralimentation avant le moteur et le conduit d'échappement, sans passer par le cylindre.

9. Dispositif selon l'une des revendications 5 à 7, caractérisé en ce qu'il comprend une soupape d'admission supplémentaire (15) reliée au collecteur d'admission pour former une réserve d'air en amont de ladite soupape d'admission supplémentaire (15), la liaison entre ladite soupape (15) et le collecteur pouvant être interrompue par un clapet (17), cette liaison étant fermée aux charges élevées.

## Claims

1. Method for improving the efficiency of a four-stroke Diesel engine supercharged for instance at constant pressure, the timing diagram of which comprises an overlapping phase between the lifts of at least one intake valve and of at least one exhaust valve and consisting in closing the intake valve in an advanced manner and at a stationary point, according to the Miller's cycle for automatically modulating the filling rate of the engine cylinders, characterized in that it consists in closing the exhaust valve beyond the moment of fixed closing of the intake valve in order, upon the gradual increase in the engine load, to automatically and gradually lower, from the start up to the rated power, the effective compression ratio and the temperatures at the end of compression by attendant decrease of the amount of gaseous fluid present in the exhaust duct and consisting of burnt gases or of air sucked in again by the cylinder in the vicinity of the bottom dead center, taking into account the natural evolution of the relationship between the supercharging air pressure and the counterpressure at the exhaust of the cylinder.

2. Method according to claim 1, characterized in that it consists in closing the exhaust valve during the major part of the intake phase, in partially reopening the exhaust valve before the closing of the intake valve and in closing it again after the closing of the intake valve.

3. Method according to claim 1, characterized in that it consists in maintaining a partial lift of the exhaust valve during the major part of the intake phase and in maintaining this partial lift beyond the moment of closing of the intake valve.

4. Method according to one of the foregoing claims, characterized in that it consists in delaying the closing of the exhaust valve with respect to the closing of the intake valve by a value corresponding to a rotation of the crankshaft up to 70° and even therebeyond and preferably from 25 to 45° with a closing of the intake valve lying between about 40° before the bottom dead center of the piston and about 10° after the bottom dead center of the piston, according to the Miller's cycle.

5. Device for carrying out the method such as defined in one of the foregoing claims, comprising an intake valve lift actuating cam and an exhaust valve lift operating cam (1a, 1b) having a main boss (2) and an additional boss (3); the intake valve lift actuating cam and the main boss of the exhaust valve lift operating cam allowing a lift of the intake and exhaust valves in such a manner that the timing diagram comprises an overlapping phase between the lifts of these valves, with an advanced closing, at a fixed point, of the intake valve according to the Miller's cycle, characterized in that the additional boss (3) of the exhaust valve lift operating cam (1a, 1b) closes the exhaust valve beyond the moment of the fixed closing of the intake valve.

6. Device according to claim 5, characterized in that the aforesaid additional boss (3) is distinct from the aforesaid main boss (2) in order that the cam provides at first for the closing of the exhaust valve, then for its reopening before the closing of the intake valve and at last for its closing after the closing of the intake valve.

7. Device according to claim 5, characterized in that the aforesaid additional boss (3) extends the aforesaid main boss (2) for maintaining a partial lift of the exhaust valve during the major part of the intake phase and beyond the moment of closing of the intake valve.

8. Device according to one of claims 5 to 7, characterized in that a supply of fresh air is provided directly downstream of the exhaust valves through the medium of a direct by-pass device between the supercharging air before the engine and the exhaust duct without passing through the cylinder.

9. Device according to one of claims 5 to 7, characterized in that it comprises an additional intake valve (15) connected to the intake manifold to form a supply of air upstream of said additional intake valve (15), the connection between the said valve (15) and the manifold being interruptable by a valve (17), this connection being shut off at high loads.

**Patentansprüche**

1. Verfahren zum Verbessern der Leistung eines zum Beispiel unter gleichbleibendem Druck aufgeladenen Viertakt-Dieselmotors, dessen Steuerdiagramm eine Überlappungsphase zwischen den Hüben von wenigstens einem Einlassventil und von wenigstens einem Auslassventil aufweist und das darin besteht, das Einlassventil vorzeitig und zu einem festen Punkt gemäss dem Millerschen Kreisprozessverfahren zu schliessen, um das Füllungsverhältnis der Zylinder des Motors selbsttätig zu modulieren, dadurch gekennzeichnet, dass es darin besteht, das Auslassventil über dem festen Schliesszeitpunkt hinaus des Einlassventils zu schliessen, um bei allmählicher Steigerung der Belastung des Motors das tatsächliche Verdichtungsverhältnis und die Temperaturen am Ende der Verdichtung von dem Start ab bis zur Nennleistung selbsttätig und fortschreitend durch gleichzeitige Verringerung der in der Auspuffleitung anwesenden Menge des gasförmigen Fliessmittels herabzusetzen, welches aus den Verbrennungsgasen oder der durch den Zylinder im Bereich des unteren Totpunktes wieder angesaugten Luft besteht, unter der Berücksichtigung des natürlichen Verlaufs der Beziehung zwischen dem Aufladedruck und dem Auspuffgegendruck des Zylinders.

2. Verfahren nach Anspruch 1, dadurch gekennzeichnet, dass es darin besteht, das Ausgangsventil während des grössten Teils der Einlassphase zu schliessen, das Auslassventil vor dem Schliessen des Einlassventils teilweise wieder zu öffnen und es nach dem Schliessen des Einlassventils wieder zu schliessen.

3. Verfahren nach Anspruch 1, dadurch gekennzeichnet, dass es darin besteht, einen teilweisen Hub des Auslassventils während des grössten Teils der Einlassphase aufrechtzuerhalten und diesen teilweisen Hub über den Zeitpunkt des Schliessens des Einlassventils hinaus aufrechtzuerhalten.

4. Verfahren nach einem der vorangehenden Ansprüche, dadurch gekennzeichnet, dass es darin besteht, das Schliessen des Auslassventils gegenüber dem Schliessen des Einlassventils um einen einer Kurbelwellendrehung bis 70° und sogar darüber hinaus und vorzugsweise von 25 bis 45° entsprechenden Wert zu verzögern, bei einem Schliessen des Einlassventils, das zwischen ungefähr 40° vor dem unteren Totpunkt des Kolbens und ungefähr 10° nach dem unteren Totpunkt des Kolbens liegt, gemäss dem Millerschen Kreisprozessverfahren.

5. Vorrichtung zur Durchführung des in einem der vorangehenden Ansprüche dargelegten Verfahrens, mit einem den Einlassventilhub steuernden Nocken (1a) und einem den Auslassventilhub steuernden Nocken (1b), welcher eine Haupterhöhung (2) und eine zusätzliche Erhöhung (3) besitzt; wobei der den Einlassventilhub steuernde Nocken und die Haupterhöhung des den Auslassventilhub steuernden Nockens einen Hub der Einlass- und Auslassventile derart ermöglicht, dass das Steuerdiagramm eine Überlappungsphase zwischen den Hüben dieser Ventile umfasst, mit einem vorzeitigen Schliessen des Einlassventils zu einem festen Punkt, gemäss dem Millerschen Kreisprozessverfahren, dadurch gekennzeichnet, dass die zusätzliche Erhöhung (3) des den Auslassventilhub steuernden Nockens (1a, 1b) das Auslassventil jenseits des festen Schliesszeitpunktes des Einlassventils schliesst.

6. Vorrichtung nach Anspruch 5, dadurch gekennzeichnet, dass die vorgenannte zusätzliche Erhöhung (3) sich von der vorgenannten Haupterhöhung (2) unterscheidet, damit der Nocken zuerst das Schliessen des Auslassventils und dann dessen Wiedereröffnen vor dem Schliessen des Einlassventils und schliesslich sein Schliessen nach dem Schliessen des Einlassventils bewirkt.

7. Vorrichtung nach Anspruch 5, dadurch gekennzeichnet, dass die vorgenannte zusätzliche Erhöhung (3) die vorgenannte Haupterhöhung (2) fortsetzt, um einen teilweisen Hub des Auslassventils während des grössten Teils der Einlassphase und jenseits des Schliesszeitpunkts des Einlassventils aufrechtzuerhalten.

8. Vorrichtung nach einem der Ansprüche 5 bis 7, dadurch gekennzeichnet, dass ein Vorrat an frischer Luft unmittelbar stromaufwärts der Auslassventile über eine direkte Umgehungsvorrichtung zwischen der Aufladeluft vor dem Motor und der Auspuffleitung, ohne durch den Zylinder zu führen, gebildet wird.

9. Vorrichtung nach einem der Ansprüche 5 bis 7, dadurch gekennzeichnet, dass sie ein mit der Ansaugsammelleitung verbundenes zusätzliches Einlassventil (15) zur Bildung eines Luftvorrats stromaufwärts von dem zusätzlichen Einlassventil (15) aufweist, wobei die Verbindung zwischen dem besagten Ventil (15) und der Sammelleitung durch ein Ventil (17) unterbrochen werden kann, dabei diese Verbindung bei hohen Belastungen geschlossen ist.

0 015 791

*Fig. 3.*

$P_3, P_4$

$P_3$  
$P_4$

$P_3/P_4$

6  
5  
4  
3

1,3  
1,2  
1,1  
1

5  0,125  0,2  10  15  50%  20  100%  P

$P_{me}$

*Fig. 1.*

H

$B_1$

$A_1$

III  
II  
I

AOE  PMB  AOA  PMH  RFE  PMB  RFA  °AM

*Fig. 2.*

H

$B_2$

$A_{2a}$  
$A_{2b}$

IV  
III  
II  
I

h

AOE  PMB  AOA  PMH  AFA  RFE  PMB  °AM

11

0 015 791

# *Fig. 4.*

# *Fig. 9.*

# *Fig. 7.*

# *Fig. 8.*

*Fig. 5.*

0 015 791

*Fig. 6.*

15